# EUROPEAN PATENT APPLICATION

(11) **EP 0 972 635 A1**
(43) Date of publication of application: **19.01.2000**
(21) Application number: 98202409.3
(22) Date of filing: 17.07.1998
(51) Int. Cl.: B32B 29/00, D21H 19/82, D21H 27/30, C09J 11/06

(54) **Paper laminates for use in food packaging**

(71) Applicant: MINNESOTA MINING AND MANUFACTURING COMPANY, St. Paul, Minnesota 55133-3427 (US)
(72) Inventor: Govaerts, Ludo c/o 3M Chemical Group, 2070 Zwijndrecht (BE)
(74) Representative: Voortmans, Gilbert J.L.

(57) **Abstract**

The present invention provides a paper laminate for use in packaging of food comprising:
(i) a fluorochemical treated paper having a first major side and an opposite second major side;
(ii) a layer substantially free of fluorochemical compounds on said first major side;
(iii) and an adhesive layer on said second major side or on said first major side between said layer substantially free of fluorochemical compounds and said fluorochemical treated paper,
   characterized in that the adhesive layer contains a fluorochemical oil repellent.

The paper laminates can be used for the wrapping of food in a food package and provide an improved barrier against grease and oil attempting to penetrate from the inside of a food package to its surface.

## Description

### 1. Field of the invention

The present invention relates to paper laminates for use in the packaging of food. In particular, the present invention relates to paper laminates that contain one or more paper layers that have been treated by a fluorochemical. The present invention further relates to a method for making paper laminates and food packaging including the paper laminate.

### 2. Background of the invention

The paper industry makes a large variety of packaging for food use. A stain or leak-proof barrier is required for paper that comes into contact with oily, greasy or watery foods. Polymeric barriers such as polyethylene are costly to apply to paper and interfere with its repulpability or recyclability after its intended use, and are being increasingly restricted by regulations. Fluorine-containing chemicals and copolymers, collectively referred to as fluorochemicals, have been used for a number of years to impart water, oil and grease resistance to substrates such as paper because of their effectiveness at low concentrations and their adaptability to conventional methods of manufacturing paper.

Various fluorochemical surface and internal sizing agents for paper treatment are described, for example, in Rengel and Young, "Internal Sizing of Paper and Paperboard", Tappi monograph series number 33, pp. 170-189 (1971), Colbert, "Fluorochemicals-Fluid Repellency for Non-woven Substrates", Tappi, The Journal of the Technical Association of the Pulp and Paper Industry, 59, 9, (September, 1976), Banks, Ed., Organofluorine Chemicals and their Industrial Applications, pp. 231-234 (1979), and Schwartz, "Oil Resistance Utilizing Fluorochemicals", Tappi conference preprint, 1980 Sizing Short Course, Atlanta, Georgia. Several fluorochemical phosphates have been approved by the U.S. Food and Drug Administration for use on paperboard in direct contact with food for human consumption. These fluorochemical phosphates can be used as surface treatments or as internal treatments. They primarily provide oil resistance, and are used on paper plates, bags for bakery goods, cartons and trays for oil fried foods (e.g., French fries), and in bags and cartons for pet foods.

Fluorochemicals are generally applied to such materials either by surface application to the paper or by addition to the paper pulp before the paper is formed. Surface application may be carried out by means such as spraying, dipping, roller-coating or padding to apply the fluorochemical to one or both sides of the essentially finished product. This type of treatment has the advantage that the overall amount of fluorochemical on the paper is directly controllable since there is a limited opportunity for loss at this stage of the process. It has the disadvantage that the fluorochemical is applied primarily to the surface of the paper and may offer only limited protection to deeper liquid penetration.

Alternatively, the fluorochemical can be added to the paper pulp under appropriate conditions that all or the majority of the fluorochemical is retained by the paper after it is dewatered. In this type of treatment the fluorochemical is applied throughout the thickness of the paper, not primarily just to the surface. This more uniform treatment is particularly important in providing resistance to penetrating liquids if the paper is creased or abraded in some areas.

In many food packaging applications, the fluorochemical treated paper is provided with one or more layers to improve properties of the packaging such as ink receptivity, gloss and strength. These layers are typically at the outside of the packaging while the fluorochemical treated paper layer or layers will be on the inside of the packaging thereby providing a barrier against oil and grease contained in the packaged food. Such paper laminates are typically obtained by adhering the fluorochemical treated paper layer to a substrate, e.g. another paper layer free of fluorochemical with the aid of an adhesive layer.

For example, a paper board used in the packaging of pet food, which is typically food with high grease content, is a paper laminate of at least three layers in the order given: a top layer of a clay coating, a fluorochemical treated paper layer and an untreated paper layer. The fluorochemical treated paper layer and untreated paper layer may be adhered to each other with an adhesive layer. Similarly, coffee bean packaging may consist of a paper laminate containing a fluorochemical treated and untreated paper layer adhered to each other by an adhesive. It has been found now that while the fluorochemical treated paper layer by itself provides an effective barrier to grease and oil, the above described laminates are nevertheless prone to the appearance of oil stains, particularly in areas of microcracks or folds.

A similar phenomenon was observed in the case of paper laminates used as labels on bottles containing, for example, vegetable oil. Typically, these paper laminates contain, on one side of a fluorochemical treated paper, a clay coating to improve the ink receptivity and gloss of the label and on the side of the paper opposite the clay coating, an adhesive layer. Using this adhesive layer, the label may be adhered to the surface of a bottle. During transportation and manipulation, very small amounts of oil may flow along the surface of the bottle and penetrate into the adhesive layer. Despite the presence of the fluorochemical treated paper layer, it was found that the oil could penetrate through the adhesive layer to the surface of the label thereby detracting from the appearance of the label.

### 3. Summary of the invention

The present invention provides a paper laminate for use in packaging of food comprising:
(i) a fluorochemical treated paper having a first major side and an opposing second major side;
(ii) a layer substantially free of fluorochemical compounds on said first major side; and
(iii) an adhesive layer on said second major side or on said first major side between said layer substantially free of fluorochemical compounds and said fluorochemical treated paper,
   characterized in that the adhesive layer contains a fluorochemical oil repellent.

The present invention further provides a method of making a paper laminate for use in packaging of food, the method comprising the steps of:
(a) providing a fluorochemical treated paper having a first major side and an opposing second major side;
(b) applying an adhesive layer on the first or second major side of the fluorochemical treated paper;
(c) applying a layer that is substantially free of fluorochemical compounds on the first major side;
   characterized in that the adhesive layer contains a fluorochemical oil repellent.

Further, the present invention provides a package comprising a cavity for holding food, said cavity being defined by a wrapping, and said wrapping comprising a paper laminate as defined above and wherein said second major side of said fluorochemical treated paper is oriented towards said cavity and the first major side of said fluorochemical treated paper is oriented away from said cavity.

### 4. Brief description of the drawings

To illustrate the invention and to aid in the understanding thereof, the figures 1 to 3 are provided.
Figure 1 is a schematic representation of a first embodiment of this invention comprising an untreated paper layer laminated to a fluorochemical treated paper.
Figure 2 schematically illustrates a layer arrangement of a paper laminate of the present invention forming a paper board.
Figure 3 schematically shows a paper laminate in the form of a label adhered to the surface of a bottle.

### 5. Detailed description of the invention

Including a fluorochemical oil repellent in the adhesive layer of the paper laminates provides a substantially improved barrier to oil and grease penetration through the paper laminate. The adhesive layer of the laminate may be provided on either the surface of the first or second major side of the fluorochemical treated paper.

In the context of this invention, the term "first major side" means the side of the fluorochemical treated paper that will ultimately point towards the outside of the food package when the paper laminate is incorporated into a food package. The" second major side" means the major side of the fluorochemical treated paper opposite to the first major side. The second major side will be the side of the fluorochemical treated paper pointing towards the inside, or food holding cavity, of the package when the paper laminate is incorporated into a food package. The second major side will be the side of the fluorochemical treated paper closest to the food without however necessarily being in contact with the food.

In the context of this invention, the term "fluorochemical treated paper" means a paper that has been treated with a fluorochemical composition to provide oil repellent properties to the paper and many such treatments are described in the art. The fluorochemical treatment of the paper is preferably carried out at the wet-end of a paper machine resulting in an internal treatment of the paper, i.e., the fluorochemical composition is incorporated into the paper. Nevertheless, the fluorochemical compound may also be applied in a surface treatment such as a size press or calendar stack, which is essentially a surface treatment. It is furthermore possible to use a combination of wet-end and surface application treatments to prepare the fluorochemical treated papers used in this invention.

The term "fluorochemical oil repellent" means a fluorinated organic compound that is capable of providing oil repellency properties to a paper substrate. Examples of fluorochemical oil repellents that can be added to the adhesive layer include the fluorochemical oil repellents described in Rengel and Young, "Internal Sizing of Paper and Paperboard", Tappi monograph series number 33, pp. 170-189 (1971), Colbert, "Fluorochemicals-Fluid Repellency for Non-woven Substrates", Tappi, The Journal of the Technical Association of the Pulp and Paper Industry, 59, 9, (September, 1976), Banks, Ed., Organofluorine Chemicals and their Industrial Applications, pp. 231-234 (1979), and Schwartz, "Oil Resistance Utilizing Fluorochemicals", Tappi conference preprint, 1980 Sizing Short Course, Atlanta, Georgia. Particularly suitable fluorochemical oil repellents are fluorochemical phosphates described in for example US 5,271,806, US 3,083,224 and US 3,094,547, the fluorochemical copolymers described in US 4,529,658, US 4,525,423, US 5,674,961 and the fluorochemical oil repellents commercially available from 3M Company under the brand SCOTCHBAN™.

An essential feature of the present invention is that the adhesive layer contains one or more fluorochemical oil repellents. It was found that the use of the adhesive layer in a packaging laminate reduces the penetration of oil or grease through the laminate. Depending on the particular paper laminate construction, the adhesive layer containing the fluorochemical oil repellent, can be present on the first major side or on the second major side of the fluorochemical treated paper.

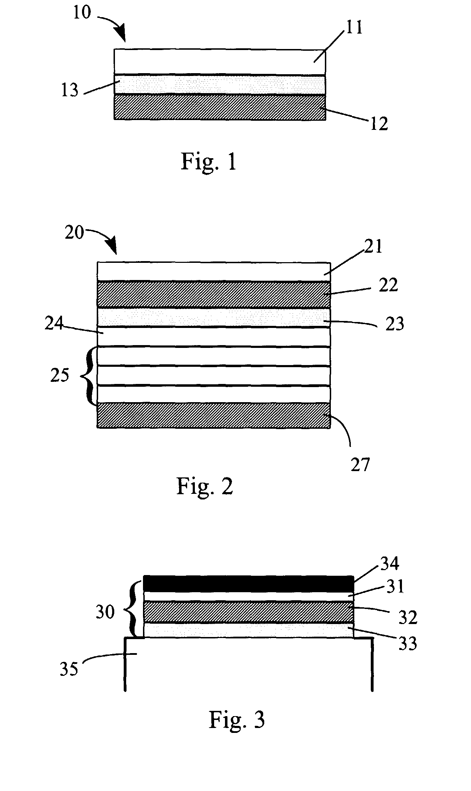

According to one embodiment of the present invention schematically illustrated in figure 1, the paper laminate 10 consists of a paper layer 11 substantially free of fluorochemical (untreated paper) and a fluorochemical treated paper layer 12. These paper layers are laminated together with an adhesive layer 13 containing the fluorochemical oil repellent, for example, the same fluorochemical used to treat the fluorochemical treated paper. This type of paper laminate is particularly suitable as wrapping to package coffee beans. In such a package, the fluorochemical treated paper layer 12 will form the inside of the package and the untreated paper layer 11 will form the outside of the package.

According to another embodiment of the present invention shown in figure 2, the paper laminate 20 forms a paper board. Such a paper board comprises at least four layers. From top to bottom, these layers typically are a clay coating 21 free of fluorochemical compounds, a fluorochemical treated paper 22, an adhesive layer 23 containing the fluorochemical oil repellent and an untreated paper layer 24. The untreated paper layer 24 may be bonded to further untreated paper layers 25 and a further fluorochemical treated paper layer 27. Also in this case, it was found that if the adhesive layer 23 contains the fluorochemical oil repellent, a food package prepared from such a paper board is substantially less prone to development of oil stain spots at the surface of the package.

In accordance with a third embodiment of the present invention, the paper laminate may take the form of a label to be affixed to a food package such as, for example, a bottle of vegetable oil. Figure 3 schematically illustrates a paper laminate 30 in the form of a label affixed to the surface of a bottle 35. Paper laminate 30 contains a fluorochemical treated paper 32 having on the second major side an adhesive layer 33 adhering the paper laminate 30 to the surface of bottle 35. The paper laminate 30 further contains on the first major side of the fluorochemical treated paper 32 a clay coating 31 that is free of fluorochemical compounds and is covered by a varnish layer 34. In this embodiment, the adhesive layer 33 contains the fluorochemical oil repellent because if this adhesive layer does not contain the fluorochemical oil repellent, small amounts of oil leaking along the bottle surface can penetrate the adhesive layer 33 and ultimately penetrate through the fluorochemical treated paper 32 into the clay coating 31 to form undesirable oil spots.

The weight of paper laminates of this invention may vary over a wide range and primarily depends on the intended packaging application. Typically, the weight of paper laminates in accordance with embodiments 1 and 3 will vary between 50 g/m² and 200 g/m² whereas the paper boards of embodiment 2 will typically have a weight of 250g/m² to 500g/m². Further, the individual paper layers of the paper laminates typically have a weight of 20 to 120g/m². The thickness of the adhesive layer in the paper laminates of the invention may vary between 2 and 5µm. Other optional layers used in the paper laminates such as a clay coating layer may have a thickness as appropriate and commonly used in the art of paper making.

The paper laminates of the present invention can be obtained by first providing a fluorochemical treated paper. The fluorochemical treated paper may be obtained by methods well known in the art. For example, in accordance with one embodiment of this invention, a fluorochemical phosphate salt corresponding to general formula (I) may be used in preparing the fluorochemical treated paper: 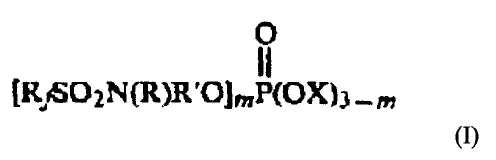 wherein R is hydrogen or an alkyl group having from 1 to about 12, preferably from 1 to 6, carbon atoms; R' is an alkylene bridging group containing 2 to about 12 carbon atoms, preferably from 2 to 4 carbon atoms, and can be branched or straight chain; R_{f} is a fluoroaliphatic radical; m is integer from 1 to 3; and X is a monovalent salt forming ion.

The fluoroaliphatic group is designated herein as R_{f}. R_{f} is a stable, inert, non-polar, preferably saturated monovalent moiety which is both oleophobic and hydrophobic. R_{f} preferably contains at least about 3 carbon atoms, more preferably 3 to about 20 carbon atoms, and most preferably about 6 to about 12 carbon atoms. R_{f} can contain straight chain, branched chain, or cyclic fluorinated alkyl groups or combinations thereof or combinations thereof with straight chain, branched chain, or cyclic alkyl groups. R_{f} is preferably free of polymerizable olefinic unsaturation and can optionally contain catenary heteroatoms such as oxygen, divalent or hexavalent sulfur, or nitrogen. It is preferred that each R_{f} contain about 40% to about 78% fluorine by weight, more preferably about 50% to about 78% fluorine by weight The terminal portion of the R_{f} group contains a fully fluorinated terminal group. This terminal group preferably contains at least 7 fluorine atoms, e.g., CF₃CF₂CF₂--, (CF₃)₂CF--, --CF₂SF₅, or the like. Perfluorinated aliphatic groups, i.e., those of the formula CₙF_{(₂n+1)}, are the most preferred embodiments of R_{f}.

Generally, the fluorochemical phosphate salt is a mixture of mono-ester, di-ester and tri-ester. The amount of tri-ester present should not exceed about 5 weight percent of the product since it is not easily dispersed and contributes little to repellency. Typically, the ester distribution is about 5 to 10 weight percent mono-ester, about 75 to 90 weight percent di-ester and about 2 to 5 weight percent tri-ester.

Examples of these phosphate salts include, for example: ammonium bis-(N-ethyl perfluorooctanesulfonamidoethyl) phosphate,
sodium bis-(N-ethyl perfluorooctanesulfonamidoethyl) phosphate,
lithium bis-(N-ethyl perfluorooctanesulfonamidoethyl) phosphate,
diethanol ammonium bis-(N-ethyl perfluorooctanesulfonamidoethyl) phosphate,
sodium mono-(N-hexylperfluorodecanesulfonamidoethyl) phosphate,
ammonium bis-(N-propylperfluorocyclohexanesulfonamidoethyl) phosphate,
lithium mono-(perfluorohexanesulfonamidobutyl) phosphate,
ammonium bis-(N-ethylperfluoroethylcyclohexanesulfonamidoethyl) phosphate, and ammonium di-phenyl (N-hexylperfluorocyclohexanesulfonamidoethyl) phosphate. Such compounds are disclosed, for example, in U.S. Pat. No. 3,094,547 which is incorporated herein by reference.

The fluorochemical phosphate salt of formula (I) may be applied to paper either by internal addition in which the composition is dispersed in a pulp suspension or slurry for making paper or by external addition by dipping or spraying an aqueous solution of the composition onto paper or by use of a size press, all of which are well known to those skilled in the art. Preferably, the fluorochemical phosphate salt is applied to the paper in an amount of about 0.05 to 1, more preferably 0.1 to 0.5 weight percent, based on the weight of the paper.

Alternatively, the fluorochemical copolymers disclosed in US 4,525,423 may be employed in making the fluorochemical treated paper. These copolymers comprise (by weight) about:
(a) 60 to 80% of polymer chain repeat units derived from fluoroacrylate monomer(s) of the formula:

   (R_{*f*} )_{*p*}QOCOCH=CH₂

   wherein R_{f} is a fluoroaliphatic radical-containing group having 3 to 20 carbon atoms as described above, Q is a polyvalent organic connecting group, and p is 1 or 2;
(b) 1 to 30% of polymer chain repeat units derived from halogenated alkyl or alkoxyalkyl acrylate monomer(s) of the formula:

   R¹O(R²O)_{*n*}[C(O)CH₂O]_{*m*}COCH=CH₂

   wherein R¹ is a C₁₋₂₀ alkyl, cycloalkyl, haloalkyl, or halocycloalkyl group, R² is a C₁₋₆ alkylene or haloalkylene group, each R² group can be the same as or different from other R² groups, at least one R¹ or R² group contains a halogen atom, n is zero to about 10 with the proviso that when n is zero R¹ is a C₁₋₁₆ haloalkyl or halocycloalkyl group, and m is zero or 1;
(c) 1 to 15% of polymer chain repeat units derived from monomer(s) of the formula: 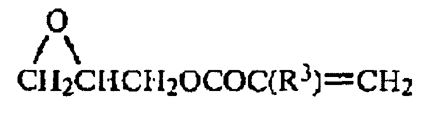 wherein R³ is H or methyl;
(d) 1 to 6% of polymer chain repeat units derived from cationic monomer(s) of the formula:

   CH₂=C(R⁴)ZY⁺X⁻

   wherein R⁴ is H or methyl, Z is a divalent electron-withdrawing group which activates free-radical polymerization such as an organic group having a carbonyl, an aromatic group, an oxygen atom or sulfur atom bonded directly to the vinylidene group such as for example -COO(CH₂)ₚ-, -CO(CH₂)ₚ-,-CONH(CH₂)ₚ-, -OCO(CH₂)ₚ-, -O(CH₂)ₚ-, -S(CH₂)ₚ-, with p being an integer of 1 to 10, Y⁺ is a monovalent cationogenic group such as phosphonium, sulfonium or ammonium groups or a pyridinium group, and X⁻ is a water solubilizing anion such as for example a halide ion or an alkylsulfate ion; and
(e) 0 to 20% of polymer chain repeat units derived from vinylidene chloride;
   with the proviso that the weight percent of carbon-bonded fluorine in the copolymer is at least about 15%.

In order to prepare the fluorochemical treated paper, the fluorochemical copolymers preferably are applied as internal (i.e., "wet-end") additives to an aqueous suspension of cellulose fibers, using conventional paper making equipment. Alum content of the furnish preferably should be kept at low levels, as high alum content can cause the treated paper to have reduced repellency. The fluorochemical copolymer preferably is added at or upstream from the headbox of the paper making machine, and preferably is added at the headbox. Ordinarily, a polymeric cationic retention aid is added to the stock prior to addition of the fluorochemical copolymer, in order to limit loss of the fluorochemical copolymer into the whitewater. Suitable retention aids include resins such as "Betz™ 1275" (commercially available from Betz Laboratories, Inc.) or "Reten™ 304" (commercially available from Hercules, Inc.), both of which are believed to be polymeric cationic aliphatic amides derived from adipic acid and diethylene triamine. Preferably, at least about 60 to 90 weight percent fluorochemical copolymer retention is obtained at an addition level of about 0.5 to 2 percent retention aid solids based on the weight of fibers. Adjuvants such as dyes, inhibitors, antioxidants, sizing agents, emulsifiers, and the like can be added to the fluorochemical copolymer if desired. For reasons of economy, it is preferred to employ a low level of fluorochemical copolymer, provided the desired level of oil repellency is achieved in the finished paper product. Following addition of the fluorochemical copolymer, the furnish is processed using conventional paper making technology.

Fluorochemical treated paper can also be prepared by applying the fluorochemical copolymer using surface methods, such as a size press or calendar stack. If desired, sequential internal and surface application of the fluorochemical copolymer can be employed.

To obtain the paper laminate of the present invention, the adhesive layer containing fluorochemical oil repellent is provided on the first or second major side of the fluorochemical treated paper and a layer substantially free of fluorochemical compounds is provided on the first major side of the fluorochemical treated paper. The fluorochemical oil repellent used in the adhesive layer may be any of the fluorochemicals described herein for use in the preparation of the fluorochemical treated paper and is preferably a fluorochemical phosphate salt according to formula (I) or the fluorochemical copolymer described above. The amount of fluorochemical oil repellent added to the adhesive layer is preferably kept at a low level so as to avoid impairing the adhesive properties thereof. Typically, the amount of fluorochemical oil repellent added to the adhesive layer will be between 0.2% and 1.5% by weight on the basis of the weight of the adhesive, preferably between 0.5% and 1.5% by weight on the basis of the weight of the adhesive.

The adhesive used in the adhesive layer may be any adhesive commonly used in the making of paper laminates. Examples of commonly used adhesives in the lamination of paper are described in for example "Pulp and Paper, Chemistry and Chemical Technology", Third edition, Volume 4, Chapter 25, Edited by James P. Casey. Examples of adhesive that can be used in this invention include vegetable and animal adhesives, synthetic gums, sodium silicate solutions, starch and dextrin adhesives, resin emulsions such as for example polyurethane emulsions, polyvinyl acetate emulsions and acrylic emulsions, rubber latex adhesives such as neoprene, styrene-butadiene and acrylonitrile-butadiene latex adhesive, asphalt emulsions, organic solvent solutions of synthetic resins, rubbers, rosins and cellulose derivatives and hot melt adhesives including hot melt resins, wax adhesives and asphalt adhesives.

The adhesive layer may be applied by any known coating technique including roll-coating, spray coating, gravure coating, curtain coating and metering-rod.

The layer substantially free of fluorochemical compounds applied on the first side of the fluorochemical treated paper is typically a clay coating or a untreated paper layer as described in the embodiments illustrated by figures 1 to 3. To obtain the paper laminate shown in figure 1, the adhesive layer 13 is applied to the fluorochemical treated paper 12 and/or to the untreated paper layer 11, the layers 11 and 12 are laminated together, and pressure is then applied to the laminate to permanently adhere the two layers to each other. Typically, a starch or dextrin adhesive or a polyurethane-based adhesive is used to adhere the paper layers to each other.

The laminate depicted in figure 2 is typically made using a so-called cylinder board machine or a combination of cylinder forms and a fourdrinier wire. In the latter, pulp is placed on a wire mesh cylinder constructed around a metal cylindrical frame. The cylinder turns in a container (also called "vat") which is continuously supplied with new pulp. Upon rotation of the cylinder cellulose deposits on the wire mesh cylinder, drains and is removed from the cylinder at the top by a felt which is pressed to the wire mesh by means of a couch roll.

Cylinder board machines typically contain 7 vats and one fourdrinier wire in sequence. Layers are built one upon the other and the still wet layers are then pressed together at the end between rolls in a press section. Each layer can range in base weight from 30-60 g/m² depending on pulp concentration, dewatering and speed of the machine.

Each vat liner or fourdrinier liner can contain a different mixture of pulp depending on requirements like strength, volume, stability, printability and cost. Wet layers after pressing and after drying will typically show enough cohesion in order to be processed in later stages by a converter or through its projected life cycle. Because the top layer is typically of much different fiber quality than the adjacent fiber layers it is common practice to spray native starch in between the top layer (layer 22) and the underlying layer (layer 24). Upon drying, the native starch will swell and gelatinize and will form an adhesive bond (layer 23) between the two layers. In accordance with the present invention, this adhesive layer 23 will also contain a fluorochemical oil repellent. After drying of the paper laminate a clay coating (layer 21) is provided on the top layer typical at an amount of 15 to 25 g/m² in order to provide good printability.

During the production of the board, a fluorochemical composition is added to the wet end of the top layer (layer 22 in Figure 2). The fluorochemical composition may also be added to other layers of the laminate such as the back layer (layer 27 in Figure 2).

To obtain a paper laminate in the form of a label as shown in figure 3, a fluorochemical treated paper 32 coated on the first major side with a clay coating 31 is printed on that side and provided with a varnish layer 34. An adhesive layer 33 is then provided on the second major side. The paper laminate can be adhered via adhesive layer 33 to the surface of a glass or plastic bottle by application of pressure. As the adhesive in this embodiment, a starch adhesive can, for example, be used.

The paper laminates of the present invention are used in the packaging of food. Typically, the package comprises a wrapping defining a cavity for holding food. The cavity for holding the food may take any form such as a cylinder, bottle or box. The wrapping defining the cavity comprises a paper laminate of the invention. According to one embodiment, the wrapping consists of the paper laminate and according to another embodiment, the wrapping may comprise a glass or plastic material to which the paper laminate is adhered. In the latter embodiment, the paper laminate will typically take the form of a label with consumer information printed thereon. In a package of the present invention, the second major side of the fluorochemical treated paper will be oriented towards the cavity and the first major side of the fluorochemical treated paper will be oriented away from the cavity.

The package of this invention is particularly suitable for the packaging of food comprising oil or fat. Food of high fat content (for example 30% by weight of more) can be readily packaged by a packaging of this invention without risk for the appearance of substantial grease spots on the surface of the packaging.

The following examples further illustrate the invention without however the intention to limit the invention thereto.

### EXAMPLES

In the examples, the following test method was used:

### Crease test

A 10x10 cm² test sample was folded diagonally through the center to one side to give the sample a preliminary light crease. The sample was laid on a hard, clean surface and a 2 kg roller (as specified by TAPPI T-507) was pushed over the crease just once, being careful not to exert any additional pressure. The sample was unfolded and a new crease was folded at 90° to the first crease, but with the reverse side inward. A metal ring (8.3 cm diameter, 10 mm high and 3 mm thick) was placed on the sample in order to keep the paper sample down flat. A rigid tube having a diameter of 25 mm was placed in the center of the sample and 5 g sand was poured in. The tube was removed and a small indentation in the top of the sand pile was made to receive the test oil. All of the sand was saturated with oil. The sample was stored at 60°C during 24 hours. The oil and carrier were removed and the surface was wiped clean. The sample was visually inspected for stains.

### Abbreviations

The following abbreviations and trade names were used in the Examples and Comparative Examples:
FC : fluorochemical
Scotchban™ FC 807 : anionic fluorochemical phosphate ester, commercially available from 3M
Scotchban™ FC 845 : fluorochemical acrylic polymer, commercially available from 3M
GSM : grams per square meter

### Example 1

In example 1 a 60 GSM bleached kraft paper sheet, treated with Scotchban™ FC-807 (0.5% FC solids on fiber, wet end treated) was laminated to a 60 GSM untreated bleached kraft paper sheet, clay coated on one side, by means of a water based polyurethane glue type 840 with added crosslinker 508 (available from Herberts, Germany), to which 0.75% by weight of Scotchban™ FC-807 was added. The glue was applied to the treated paper by a 6 micron metering bar. The untreated clay coated paper sheet was applied to the glue and the laminate was formed by passing the sample through 2 rollers at a pressure of 10 kPa/cm. The sample was dried at 65°C during 90 sec after which it was conditioned at room temperature during 24 hours. Comparative example C-1 was made in the same way, but using polyurethane glue without added Scotchban™ FC-807. The samples were tested according to the crease test as given above using edible corn oil on the treated side of the sample. The clay coated paper side of the laminates was observed for staining. There was a remarkable difference in the size of the stain observed. The laminate of example 1 showed only a very small transudation, whereas the laminate of comparative example C-1 showed an almost completely stained surface.

### Example 2

In example 2 two paper handsheets (hand made sheets) were prepared starting from wet pulp, according to TAPPI Procedure T 205 "Forming handsheets for physical tests of pulp". One handsheet was made with pulp containing Scotchban™ FC-845 (wet end treatment, 0.8% solids on fiber), the other handsheet did not contain Scotchban™ FC-845. Potato starch, available from Avebe, Netherlands, to which was added 1% Scotchban™ FC-845 (based on starch solids) was sprayed in between the two layers of paper. The starch was used as a 2% dispersion in water and was sprayed at about 60 GSM, in order to obtain about 1 GSM starch. After spraying, the wet handsheets were pressed between two rolls at 10 kPa/cm and dried at 100°C during 60 sec. Comparative example C-2 was made in the same way, but using starch glue without added Scotchban™ FC-845. Red dyed turpentine and red dyed dodecane test liquids were applied to the treated paper side of the laminates by using a brush. The samples were left at room temperature during 15 min, after which the untreated paper side of the laminates were visually inspected. It was observed that the laminate of comparative example C-2 showed a much higher number of stains than the laminate of example 2, especially for the dodecane solution.

### Example 3

In example 3, a clay coated bleached kraft paper, wet end treated with Scotchban™ FC-807 (0.5% solids on fiber) was partially coated with Adhesin™ A 7676 SH adhesive, available from Henkel (Germany), to which was added 1 % Scotchban™ FC-807, using a 6 micron metering bar. The adhesive was covered with a polyester film and the laminate was passed between two rolls at 10 kPa/cm. Comparative example C-3 was made using the same adhesive, but without added Scotchban™ FC-807. The laminates of example 3 and comparative example C-3 were dried at 60°C during 1 hour. Drops of olive oil were put on the rim of the treated paper. The samples were placed in an oven at 60°C during 24 hours. It was observed that the laminate of comparative example C-3 showed much more pinhole failures as compared to the laminate of example 3.

## Claims

1. Paper laminate for use in packaging of food comprising:
(i) a fluorochemical treated paper having a first major side and an opposing second major side;
(ii) a layer substantially free of fluorochemical compounds on said first major side; and
(iii) an adhesive layer on said second major side or on said first major side between said layer substantially free of fluorochemical compounds and said fluorochemical treated paper,
characterized in that the adhesive layer contains a fluorochemical oil repellent.

2. Paper laminate according to claim 1 wherein said layer substantially free of fluorochemical compounds is a paper layer and the paper laminate contains said adhesive layer containing a fluorochemical oil repellent on said first major side.

3. Paper laminate according to claim 1 wherein said layer substantially free of fluorochemical compounds is a clay coating and the paper laminate contains said adhesive layer containing a fluorochemical oil repellent on said second major side.

4. Paper laminate according to claim 3 wherein said paper laminate contains one or more paper layers adhered to said adhesive layer containing a fluorochemical oil repellent.

5. Paper laminate according to claim 3 or 4 wherein said adhesive layer comprises a starch.

6. Paper laminate according to claim 2 wherein said adhesive layer comprises a polyurethane.

7. Paper laminate according to claim 3 wherein said paper laminate is in the form of a label for application on a food package.

8. Paper laminate according to any of the previous claims wherein the fluorochemical oil repellent contained in said adhesive layer is a fluorochemical phosphate salt or a fluorochemical copolymer.

9. Method of making a paper laminate for use in packaging of food, the method comprising the steps of:
(a) providing a fluorochemical treated paper having a first major side and an opposing second major side;
(b) applying an adhesive layer on said first or second major side of said fluorochemical treated paper;
(c) applying on said first major side a layer that is substantially free of fluorochemical compounds;
characterized in that the adhesive layer contains a fluorochemical oil repellent.

10. Package comprising a cavity for holding food, said cavity being defined by said wrapping and said wrapping comprising a paper laminate as defined in any of claims 1 to 8 and wherein said second major side of said fluorochemical treated paper is oriented towards said cavity and the first major side of said fluorochemical treated paper is oriented away from said cavity.

11. Package according to claim 10 wherein said wrapping defines a bottle to which said paper laminate is adhered by said adhesive containing said fluorochemical oil repellent.

12. Food package comprising a package as defined in any of claims 10 or 11 and comprising food in said cavity.

13. Food package according to claim 12 wherein said food comprises fat or oil.
